# EUROPEAN PATENT SPECIFICATION

(11) **EP 2 713 527 B1**
(45) Date of publication and mention of the grant of the patent: **03.01.2018**
(21) Application number: 11783001.8
(22) Date of filing: 25.05.2011
(51) Int. Cl.: H04W 88/08, H04B 7/185

(54) **BASE STATION DEVICE AND SIGNAL TRANSMISSION METHOD THEREOF**
BASISSTATIONSVORRICHTUNG UND SIGNALÜBERTRAGUNGSVERFAHREN DAFÜR
DISPOSITIF DE STATION DE BASE ET SON PROCÉDÉ D'ÉMISSION DE SIGNAL

(43) Date of publication of application: 02.04.2014
(73) Proprietor: Huawei Technologies Co., Ltd., Longgang District Shenzhen, Guangdong 518129 (CN)
(72) Inventor: FU, Qiang, Shenzhen Guangdong 518129 (CN); YANG, Fangliang, Shenzhen Guangdong 518129 (CN); LI, Tingzhao, Shenzhen Guangdong 518129 (CN)
(74) Representative: Gill Jennings & Every LLP
(86) International application number: PCT/CN2011/074676
(87) International publication number: WO 2011/144084

(56) References cited:
- EP-A1- 1 713 290
- WO-A1-2010/135862
- CN-A- 101 166 064
- CN-A- 101 299 517
- CN-A- 102 036 257
- CN-U- 201 742 417
- GB-A- 2 393 580
- GB-A- 2 438 964
- US-A1- 2007 093 204

## Description

### FIELD OF THE INVENTION

Embodiments of the present invention relate to communications technologies, and in particular, to a device and method for arranging a remote module of a base station.

### BACKGROUND OF THE INVENTION

Generally, an indoor base station may include a building base band unit (Building Base band Unit, abbreviated as BBU), a radio frequency unit (Radio Frequency Unit, abbreviated as RFU) and an antenna. The RFU and the antenna are connected by using a feeder line, and the feeder line is used for transmitting signals, such as a radio frequency signal.

If a distributed base station architecture is introduced to an existing indoor base station, a separate optical fiber is needed for connecting a remote radio unit (Remote Radio Unit, abbreviated as RRU) and a BBU, and at the same time, a separate power line is further needed for transmitting an RRU direct current voltage signal, thereby increasing the complexity and the mounting cost of wiring and cabling.

WO 2010/135862 A1, which is entered into EPO with a publication No. EP2343777A1, disclose an antenna device. The antenna device includes a first antenna unit and a second antenna unit. The first antenna unit includes a first radiation module, a power divider/combiner network connected to the first radiation module, and a feeder interface connected to the power divider/combiner network. The feeder interface is connected to a radio remote unit (RRU) or a macro base station through a feeder. The second antenna unit includes a second radiation module, a transceiver array connected to the second radiation module, a baseband processing unit (BPU) connected to the transceiver array, and an optical fiber interface connected to the BPU. The optical fiber interface is connected to a baseband unit (BBU) through an optical fiber.

GB 2438964A1 discloses an optical receiver with gain control circuit which can be switched out to save power. The optical receiver converts an optical signal into an electric signal. The receiver includes a variable gain amplifier and a gain controller. The gain controller is supplied power for a defined control period only. During this period it controls the adjustment voltage to stabilize an averaged level of the electric signal to a defined value, and feed-forward-controls a gain of the variable gain amplifier. A shut off unit , such as a switch, shuts off supply of power to the gain control circuit when the control period ends, and a storage unit holds a value of an adjustment voltage previously provided by the gain controller and applies this to the variable gain amplifier. The receiver is a remote unit which receives radio over fiber optical communications from a master unit. Switching out the gain controller reduces power consumption.

### SUMMARY OF THE INVENTION

Embodiments of the present invention provide a base station device and a signal transmission method for a base station device, so as to reduce the complexity and the mounting cost of wiring and cabling.

In an aspect, the present invention provides a base station, comprising a building base band unit BBU, a radio frequency unit RFU, a first antenna connected to the RFU, a remote module, and a second antenna connected to the remote module, wherein a first converter box and a second converter box are arranged on a feeder line connecting the RFU to the first antenna, wherein the first converter box is configured to receive a remote module direct current voltage signal from a first power source module and a radio frequency signal from the RFU, transmit the remote module direct current voltage signal to the second converter box through the feeder line, and transmit the radio frequency signal to the second converter box through the feeder line; and
the second converter box is configured to receive the remote module direct current voltage signal and the radio frequency signal from the first converter box through the feeder line, transmit the remote module direct current voltage signal to the remote module to supply power to the remote module, and transmit the radio frequency signal to the antenna, to radiate the radio frequency signal to a space.

In an aspect, the present invention provides a method for arranging a remote module of a base station. The method includes:
by a first converter box, receiving a remote module direct current voltage signal from a first power source module and a radio frequency signal from a radio frequency unit, RFU connected to a building base band unit, BBU, transmitting the remote module direct current voltage signal to a second converter box through a feeder line connecting the RFU to an antenna connected to the RFU, and transmitting the radio frequency signal to the second converter box through the feeder line; and
by a second converter box, receiving the remote module direct current voltage signal and the radio frequency signal from the first converter box through the feeder line, transmitting the remote module direct current voltage signal to the remote module to supply power to the remote module, and transmitting the radio frequency signal to the antenna, to radiate the radio frequency signal to a space;
and wherein the first converter box and the second converter box are arranged on the feeder line.

It can be learned from the technical solutions that, the embodiments of the present invention can reduce the complexity and the mounting cost of wiring and cabling.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are about some embodiments of the present invention, and persons of ordinary skill in the art can derive other drawings from the accompanying drawings without creative efforts.
FIG. 1 is a schematic structural diagram of a base station device provided in an embodiment of the present invention;
FIG. 2A is a schematic structural diagram of a base station device provided in another embodiment of the present invention;
FIG. 2B is a schematic diagram of a shape of an optical fiber in the base station device shown in FIG. 2A in a third converter box and a fourth converter box;
FIG. 3 is a schematic structural diagram of a base station device provided in another embodiment of the present invention;
FIG. 4 is a schematic structural diagram of a base station device provided in another embodiment of the present invention;
FIG. 5A is a schematic structural diagram of another base station device provided in another embodiment of the present invention;
FIG. 5B is a schematic diagram of a shape of an optical fiber in the base station device shown in FIG. 5A in a first converter box and a second converter box;
FIG. 6 is a schematic structural diagram of another base station device provided in another embodiment of the present invention;
FIG. 7 is a schematic structural diagram of another base station device provided in another embodiment of the present invention;
FIG. 8 is a schematic structural diagram of another base station device provided in another embodiment of the present invention;
FIG. 9 is a schematic flowchart of a signal transmission method for a base station device provided in another embodiment of the present invention; and
FIG. 10 is a schematic flowchart of another signal transmission method for a base station device provided in another embodiment of the present invention.

### DETAILED DESCRIPTION OF THE EMBODIMENTS

In order to make objectives, technical solutions, and advantages of embodiments of the present invention more clearly, the technical solutions in the embodiments of the present invention are illustrated clearly and completely through the drawings. Obviously, the embodiments described are only a part of the embodiments of the present invention, instead of all the embodiments. All other embodiments obtained by persons of ordinary skill in the art based on the embodiments of the present invention without creative efforts shall fall within the protection scope of the present invention.

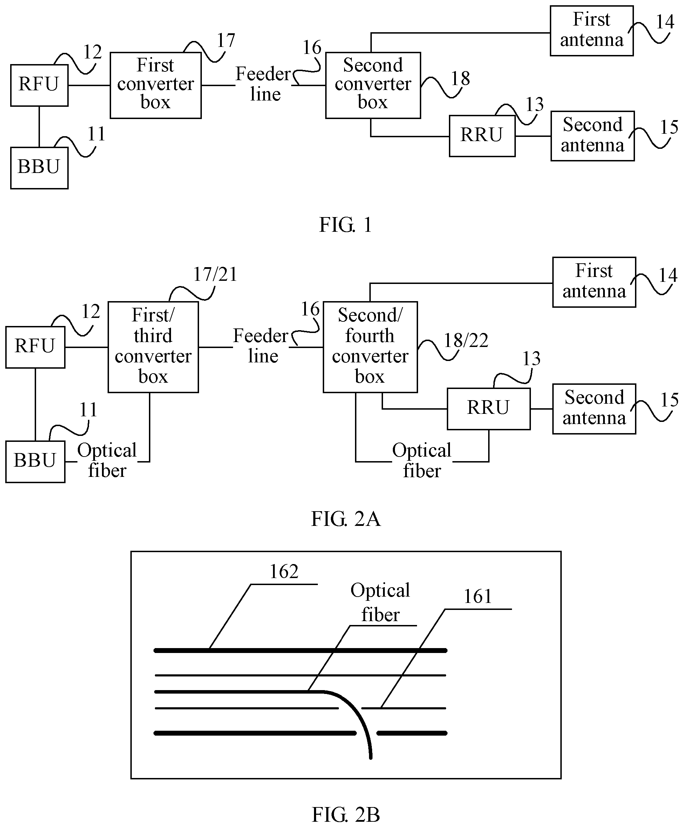

FIG. 1 is a schematic structural diagram of a base station device provided in an embodiment of the present invention; as shown in FIG. 1, the base station device of this embodiment may include a BBU 11, an RFU 12, a first antenna 14 connected to the RFU 12, an RRU 13 and a second antenna 15 connected to the RRU 13. A first converter box 17 and a second converter box 18 are arranged on a feeder line 16 connecting the RFU 12 to the first antenna 14. Specifically, the first converter box 17 may be configured to receive an RRU direct current voltage signal from a first power source module and a radio frequency signal from the RFU 12, and transmit the RRU direct current voltage signal to the second converter box 18 through the feeder line 16 and transmit the radio frequency signal to the second converter box 18 through the feeder line 16; the second converter box 18 may be configured to receive the RRU direct current voltage signal and the radio frequency signal from the first converter box 17 through the feeder line 16, transmit the RRU direct current voltage signal to the RRU 13 to supply power to the RRU 13, and transmit the radio frequency signal to the first antenna 14, to radiate the radio frequency signal to a space.

A voltage value of the RRU direct current voltage signal may include, but is not limited to, -48V.

Specifically, the first converter box 17 may be specifically arranged near the RFU 12, and the second converter box 18 may be specifically arranged near the first antenna 14.

In this embodiment, the first converter box receives the RRU direct current voltage signal (at an antenna feeding port, feeding and consolidation of RRU direct current voltage signals are implemented), and then through the feeder line, the RRU direct current voltage signal received by the first converter box is transmitted to the second converter box; the second converter box transmits the received RRU direct current voltage signal to the RRU (at an antenna port, separation of the RRU direct current voltage signals is implemented), and receives the radio frequency signal through the first converter box, and the second converter box transmits the received radio frequency signal to the first antenna, so that the RRU can transmit the RRU direct current voltage signal through a feeder line of an indoor base station, and at the same time, the radio frequency signal transmitted on the feeder line is not influenced, thereby avoiding that a separate power line is used for transmitting the RRU direct current voltage signal, and reducing the complexity and the mounting cost of wiring and cabling.

FIG. 2A is a schematic structural diagram of a base station device provided in another embodiment of the present invention; as shown in FIG. 2A, on the basis of the above embodiment, a third converter box 21 and a fourth converter box 22 may be further arranged on the feeder line 16 of this embodiment. Specifically, the third converter box 21 may be configured to thread an optical fiber into an internal conductor 161 of the feeder line 16 through an external conductor 162 of the feeder line 16 and the internal conductor 161 of the feeder line 16; the fourth converter box 22 may be configured to thread the optical fiber in the internal conductor 161 of the feeder line 16 out of the external conductor 162 of the feeder line 16 and the internal conductor 161 of the feeder line 16, in which the BBU 11 is connected to the RRU 13 through the optical fiber. For the shape of the optical fiber in the third converter box 21 and the fourth converter box 22, reference may be made to FIG. 2B.

In this way, the RRU can transmit a high-speed data signal by threading the optical fiber into the feeder line of the indoor base station, and the radio frequency signal transmitted on the feeder line is not influenced, thereby avoiding that a separate optical fiber is used for transmitting an optical signal, and further reducing the complexity and the mounting cost of wiring and cabling.

Specifically, the third converter box 21 is arranged near the RFU 12, and the fourth converter box 22 is arranged near the RRU 13.

In this embodiment, the third converter box 21 may be a converter box separately arranged on the feeder line 16, or may be a converter box integrally arranged with the first converter box 17; similarly, the fourth converter box 22 may be a converter box separately arranged on the feeder line 16, or may be a converter box integrally arranged with the second converter box 18.

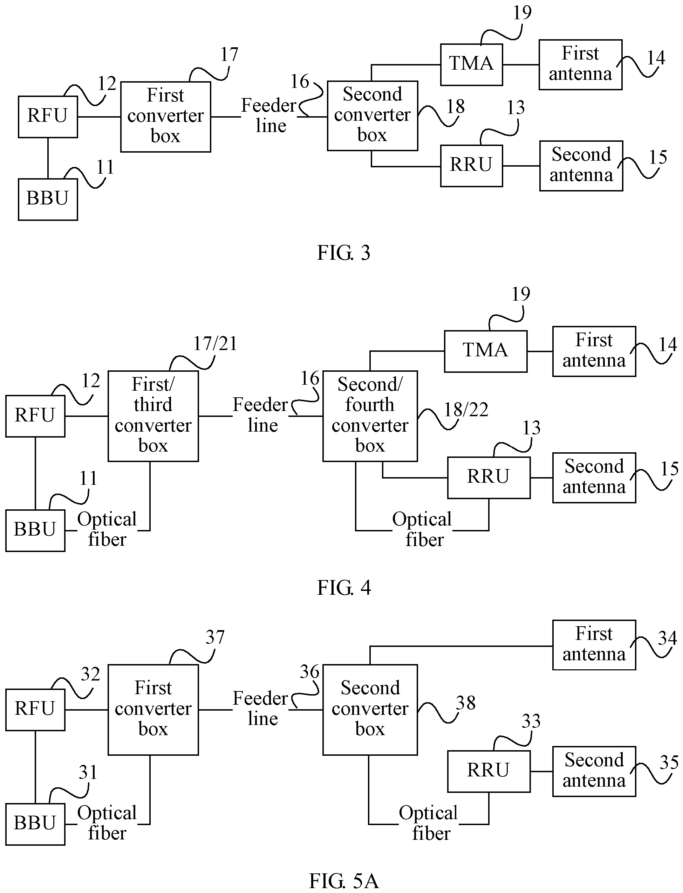

Each of FIG. 3 and FIG. 4 is a schematic structural diagram of a base station device provided in another embodiment of the present invention; as shown in FIG. 3 and FIG. 4, on the basis of the embodiment corresponding to FIG. 1 or FIG. 2A, a tower mounted amplifier (Tower Mounted Amplifier, abbreviated as TMA) 19 is further arranged on the feeder line 16 of this embodiment, that is, the tower mounted amplifier TMA 19 is further arranged between the RFU 12 and the first antenna 14. The second converter box 18 may be further configured to convert the RRU direct current voltage signal into a TMA direct current voltage signal, and transmit the TMA direct current voltage signal to the TMA 19 to supply power to the TMA 19.

A voltage value of the TMA direct current voltage signal may include, but is not limited to, 12V or 24V.

Optionally, in this embodiment, the first converter box 17 may be further configured to receive a TMA direct current voltage signal from a second power source module, and simulate load of the TMA 19, so that the RFU 12 can give an alarm, such as overcurrent or undercurrent, according to a value of the load of the TMA corresponding to the load of the TMA 19 simulated by the first converter box 17.

Specifically, in this embodiment, the first converter box 17 may further communicate with the second converter box 18, to perform a corresponding simulation operation and a corresponding conversion operation. Specifically, the first converter box 17 may further send first indication information to the second converter box 18, to indicate a TMA direct current voltage value, so that the second converter box 18 converts the received RRU direct current voltage signal into a TMA direct current voltage signal corresponding to the TMA direct current voltage value; and receive second indication information from the second converter box 18, to indicate a value of the load of the TMA, so that the first converter box 17 simulates load of the TMA corresponding to the value of the load of the TMA; correspondingly, the second converter box 18 may further receive the first indication information from the first converter box 17, and send the second indication information to the first converter box 17. In this way, an alarming approach can be established through communication between the first converter box 17 and the second converter box 18. For example, in this embodiment, for the communication between the first converter box 17 and the second converter box 18, the communication interface technology of the antenna interface standards group (Antenna Interface Standards Group, abbreviated as AISG) may be utilized to establish an information (first indication information and second indication information) interaction channel between the first converter box 17 and the second converter box 18. The channel between the first converter box 17 and the second converter box 18 may be further used for transmitting other control information, which may be not limited in the embodiment of the present invention. For example, the first converter box 17 may further send gain information of the TMA received through the BBU 11 and the RFU 12 to the second converter box 18 through the channel, to sent the gain information to the TMA, and in this way, the TMA may set a corresponding gain according to the gain information of the TMA. Further, for example, the second converter box 18 may further send failure information of the TMA obtained from the TMA to the first converter box 17 through the channel, so as to send the failure information to the BBU 11 through the RFU 12, and in this way, the BBU 11 may perform corresponding processing according to the failure information of the TMA.

Optionally, in this embodiment, the second converter box 18 may further report the value of the load of the TMA to the RFU 12, so that the RFU 12 can give an alarm, such as overcurrent or undercurrent, according to the value of the load of the TMA reported by the second converter box 18.

Specifically, in this embodiment, the second converter box 18 may further communicate with the RFU 12, to perform a corresponding reporting operation. Specifically, the second converter box 18 sends third indication information to the RFU 12, to indicate the value of the load of the TMA. For example, the RFU 12 utilizes the communication interface technology of the antenna interface standards group (Antenna Interface Standards Group, abbreviated as AISG) to establish an information (the third indication information) interaction channel between the second converter box 18 and the RFU 12.

In this embodiment, the first converter box receives the RRU direct current voltage signal (at an antenna feeding port, feeding and consolidation of RRU direct current voltage signals are implemented), and then through the feeder line, the RRU direct current voltage signal received by the first converter box is transmitted to the second converter box; the second converter box transmits the received RRU direct current voltage signal to the RRU (at an antenna port, separation of the RRU direct current voltage signals is implemented), and the second converter box converts the received RRU direct current voltage signal into a TMA direct current voltage signal, and transmits the TMA direct current voltage signal to the TMA, so that the RRU can transmit the RRU direct current voltage signal through the feeder line of the indoor base station, and supply power to the TMA, and at the same time, the radio frequency signal transmitted on the feeder line is not influenced, thereby avoiding that a separate power line is used for transmitting the RRU direct current voltage signal, and reducing the complexity and the mounting cost of wiring and cabling.

It should be noted that, the first antenna 14 and the second antenna 15 in the embodiment corresponding to FIG. 1, FIG. 2A, FIG. 3 or FIG. 4 may be the same physical entity.

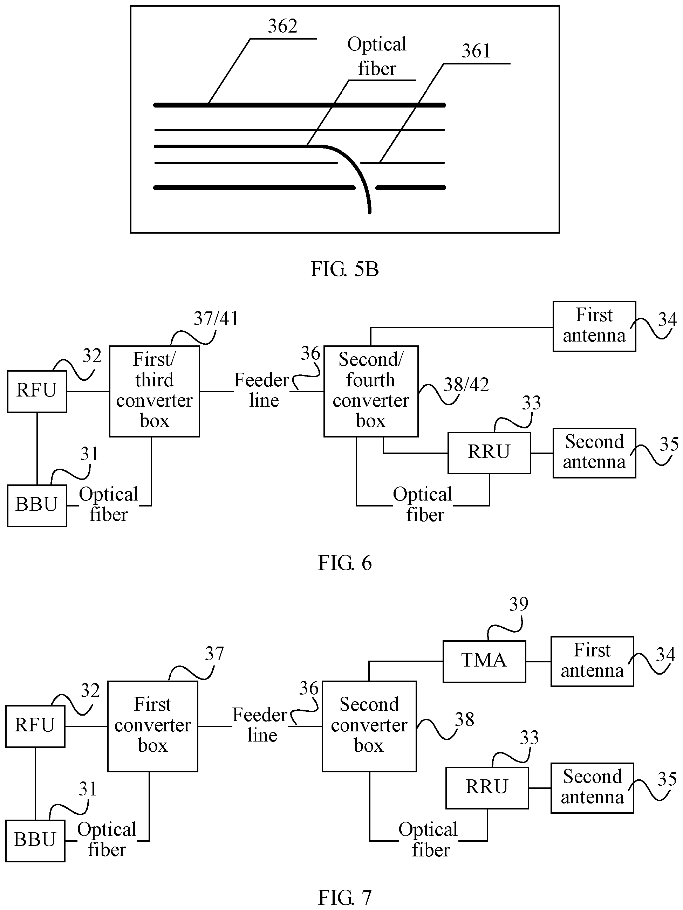

FIG. 5A is a schematic structural diagram of another base station device provided in another embodiment of the present invention; as shown in FIG. 5A, the base station device of this embodiment may include a BBU 31, an RFU 32, a first antenna 34 connected to the RFU 32, an RRU 33 and a second antenna 35 connected to the RRU 33. A first converter box 37 and a second converter box 38 are arranged on a feeder line 36 connecting the RFU 32 to the first antenna 34. Specifically, the first converter box 37 is configured to thread an optical fiber into an internal conductor 361 of the feeder line 36 through an external conductor 362 of the feeder line 36 and the internal conductor 361 of the feeder line 36; the second converter box 38 is configured to thread the optical fiber in the internal conductor 361 of the feeder line 36 out of the external conductor 362 of the feeder line 36 and the internal conductor 361 of the feeder line 36, in which the BBU 31 is connected to the RRU 33 through the optical fiber. For the shape of the optical fiber in the first converter box 37 and the second converter box 38, reference may be made to FIG. 5B.

In this embodiment, it can be implemented that, the RRU can transmit a high-speed data signal by threading the optical fiber into the feeder line of the indoor base station, and at the same time, the radio frequency signal transmitted on the feeder line is not influenced, thereby avoiding that a separate optical fiber is used for transmitting an optical signal, and reducing the complexity and the mounting cost of wiring and cabling.

FIG. 6 is a schematic structural diagram of another base station device provided in another embodiment of the present invention; as shown in FIG. 6, on the basis of the above embodiment, a third converter box 41 and a fourth converter box 42 may be further arranged on the feeder line 36 of this embodiment. Specifically, the third converter box 41 may be configured to receive an RRU direct current voltage signal from a first power source module and a radio frequency signal from the RFU 32, and transmit the RRU direct current voltage signal to the fourth converter box 42 through the feeder line 36 and transmit the radio frequency signal to the fourth converter box 42 through the feeder line 36; the fourth converter box 42 may be configured to receive the RRU direct current voltage signal and the radio frequency signal from the third converter box 41 through the feeder line 36, transmit the RRU direct current voltage signal to the RRU 33 to supply power to the RRU 33, and transmit the radio frequency signal to the first antenna 34, to radiate the radio frequency signal to a space.

A voltage value of the RRU direct current voltage signal may include, but is not limited to, -48V.

Specifically, the third converter box 41 may be specifically arranged near the RFU 32, and the fourth converter box 42 may be specifically arranged near the first antenna 34.

In this embodiment, the third converter box receives the RRU direct current voltage signal (at an antenna feeding port, feeding and consolidation of RRU direct current voltage signals are implemented), and then through the feeder line, the RRU direct current voltage signal received by the third converter box is transmitted to the fourth converter box; the fourth converter box transmits the received RRU direct current voltage signal to the RRU (at an antenna port, separation of the RRU direct current voltage signals is implemented), and receives the radio frequency signal through the third converter box, and the fourth converter box transmits the received radio frequency signal to the first antenna, so that the RRU can transmit the RRU direct current voltage signal through a feeder line of an indoor base station, and at the same time, the radio frequency signal transmitted on the feeder line is not influenced, thereby avoiding that a separate power line is used for transmitting the RRU direct current voltage signal, and reducing the complexity and the mounting cost of wiring and cabling.

In this embodiment, the third converter box 41 may be a converter box separately arranged on the feeder line 36, or may be a converter box integrally arranged with the first converter box 37; similarly, the fourth converter box 42 may be a converter box separately arranged on the feeder line 36, or may be a converter box integrally arranged with the second converter box 38.

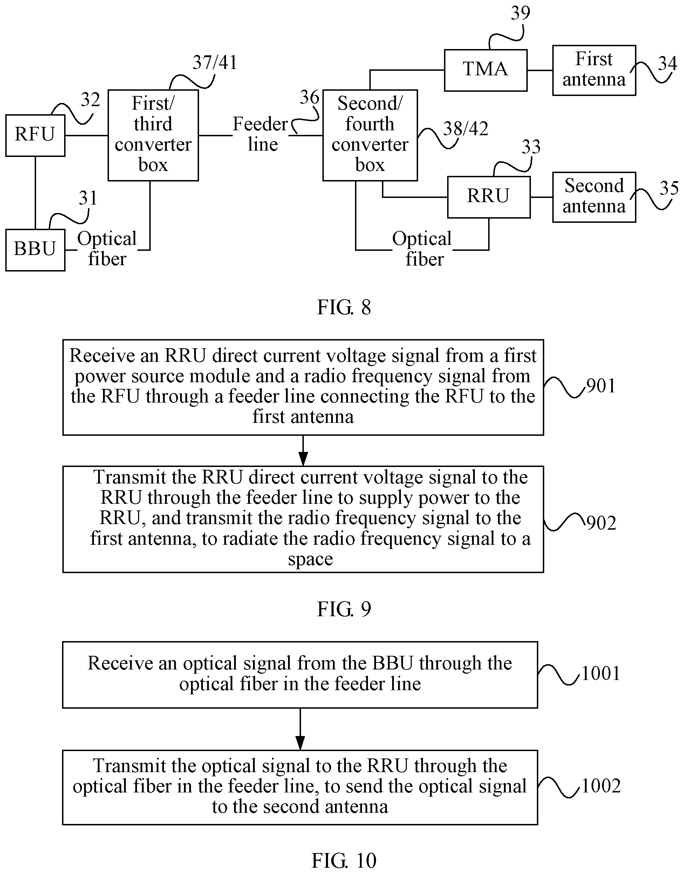

Each of FIG. 7 and FIG. 8 is a schematic structural diagram of another base station device provided in another embodiment of the present invention; as shown in FIG. 7 and FIG. 8, on the basis of the embodiment corresponding to FIG. 5A or FIG. 6, a TMA 39 is further arranged on the feeder line 36 of this embodiment, that is, the TMA 39 is further arranged between the RFU 32 and the first antenna 34. The fourth converter box 42 may be further configured to convert the RRU direct current voltage signal into a TMA direct current voltage signal, and transmit the TMA direct current voltage signal to the TMA 39, so as to supply power to the TMA 39.

A voltage value of the TMA direct current voltage signal may include, but is not limited to, 12V or 24V.

Optionally, in this embodiment, the third converter box 41 may be further configured to receive a TMA direct current voltage signal from a second power source module, and simulate load of the TMA 39, so that the RFU 32 can give an alarm, such as overcurrent or undercurrent, according to a value of the load of the TMA corresponding to the load of the TMA 39 simulated by the third converter box 41.

Specifically, in this embodiment, the third converter box 41 may further communicate with the fourth converter box 42, to perform a corresponding simulation operation and a corresponding conversion operation. Specifically, the third converter box 41 may further send first indication information to the fourth converter box 42, to indicate a TMA direct current voltage value, so that the fourth converter box 42 converts the received RRU direct current voltage signal into a TMA direct current voltage signal corresponding to the TMA direct current voltage value; and receive second indication information from the fourth converter box 42, to indicate a value of the load of the TMA, so that the third converter box 41 simulates load of the TMA corresponding to the value of the load of the TMA; correspondingly, the fourth converter box 42 may further receive the first indication information from the third converter box 41, and send the second indication information to the third converter box 41. In this way, an alarming approach can be established through communication between the third converter box 41 and the fourth converter box 42. For example, in this embodiment, for the communication between the third converter box 41 and the fourth converter box 42, the communication interface technology of the AISG may be utilized to establish an information (the first indication information and the second indication information) interaction channel between the third converter box 41 and the fourth converter box 42. The channel between the third converter box 41 and the fourth converter box 42 may be further used for transmitting other control information, which may be not limited in the embodiment of the present invention. For example, the third converter box 41 may further send gain information of the TMA received through the BBU 31 and the RFU 32 to the fourth converter box 42 through the channel, so as to send the gain information to the TMA, and in this way, the TMA may set a corresponding gain according to the gain information of the TMA. Further, for example, the fourth converter box 42 may further send failure information of the TMA obtained from the TMA to the third converter box 41 through the channel, so as to send the failure information to the BBU 31 through the RFU 32, and in this way, the BBU 31 may perform corresponding processing according to the failure information of the TMA.

Optionally, in this embodiment, the fourth converter box 42 may further report the value of the load of the TMA to the RFU 32, so that the RFU 32 can give an alarm, such as overcurrent or undercurrent, according to the value of the load of the TMA reported by the fourth converter box 42.

Specifically, in this embodiment, the fourth converter box 42 may further communicate with the RFU 32, to perform a corresponding reporting operation. Specifically, the fourth converter box 42 sends third indication information to the RFU 32, to indicate the value of the load of the TMA. For example, the RFU 12 utilizes the communication interface technology of the AISG to establish an information (the third indication information) interaction channel between the fourth converter box 42 and the RFU 32.

In this embodiment, the third converter box receives the RRU direct current voltage signal (at an antenna feeding port, feeding and consolidation of RRU direct current voltage signals are implemented), and then through the feeder line, the RRU direct current voltage signal received by the third converter box is transmitted to the fourth converter box; the fourth converter box transmits the received RRU direct current voltage signal to the RRU (at an antenna port, separation of the RRU direct current voltage signals is implemented), and the fourth converter box converts the received RRU direct current voltage signal into a TMA direct current voltage signal, and transmits the TMA direct current voltage signal to the TMA, so that the RRU can transmit the RRU direct current voltage signal through the feeder line of the indoor base station, and supply power to the TMA, and at the same time, the radio frequency signal transmitted on the feeder line is not influenced, thereby avoiding that a separate power line is used for transmitting the RRU direct current voltage signal, and reducing the complexity and the mounting cost of wiring and cabling.

It should be noted that, the first antenna 34 and the second antenna 35 in the embodiment corresponding to FIG. 5A, FIG. 6, FIG. 7 or FIG. 8 may be the same physical entity.

FIG. 9 is a schematic flowchart of a signal transmission method for a base station device provided in another embodiment of the present invention; the base station device includes a BBU, an RFU, a first antenna connected to the RFU, an RRU, and a second antenna connected to the RRU. As shown in FIG. 9, the signal transmission method for a base station device of this embodiment may include the following steps.
901: Receive an RRU direct current voltage signal from a first power source module and a radio frequency signal from the RFU through a feeder line connecting the RFU to the first antenna.
902: Transmit the RRU direct current voltage signal to the RRU through the feeder line to supply power to the RRU, and transmit the radio frequency signal to the first antenna, to radiate the radio frequency signal to a space.

The execution subject of 901 and 902 may be a base station device.

In this embodiment, the base station device receives the RRU direct current voltage signal (at an antenna feeding port, feeding and consolidation of RRU direct current voltage signals are implemented) through the feeder line, and then transmits the RRU direct current voltage signal to the RRU (at an antenna port, separation of the RRU direct current voltage signals is implemented); and receives the radio frequency signal through the feeder line, and then transmits the radio frequency signal to the first antenna, so that the RRU can transmit the RRU direct current voltage signal through a feeder line of an indoor base station, and at the same time, the radio frequency signal transmitted on the feeder line is not influenced, thereby avoiding that a separate power line is used for transmitting the RRU direct current voltage signal, and reducing the complexity and the mounting cost of wiring and cabling.

Further, an optical fiber may be threaded into the internal conductor of the feeder line through the external conductor of the feeder line and the internal conductor of the feeder line, and the optical fiber in the internal conductor of the feeder line may be threaded out of the external conductor of the feeder line and the internal conductor of the feeder line; correspondingly, the base station device may receive an optical signal from the BBU through the optical fiber in the feeder line, and transmit the optical signal to the RRU through the optical fiber in the feeder line, so as to send the optical signal to the second antenna.

In this way, the RRU can transmit a high-speed data signal by threading the optical fiber into the feeder line of the indoor base station, and at the same time, the radio frequency signal transmitted on the feeder line is not influenced, thereby avoiding that a separate optical fiber is used for transmitting an optical signal, and further reducing the complexity and the mounting cost of wiring and cabling.

Further, if a TMA is further arranged between the RFU and the first antenna, the base station device in this embodiment may further convert the RRU direct current voltage signal into a TMA direct current voltage signal through the feeder line, and transmit the TMA direct current voltage signal to the TMA, so as to supply power to the TMA.

Optionally, the base station device may further receive a TMA direct current voltage signal from a second power source module through the feeder line, and simulate load of the TMA through the feeder line, so that the RFU can give an alarm, such as overcurrent or undercurrent, according to a value of the load of the TMA.

In this embodiment, the base station device receives the RRU direct current voltage signal (at an antenna feeding port, feeding and consolidation of RRU direct current voltage signals are implemented) through the feeder line, and then transmits the RRU direct current voltage signal to the RRU (at an antenna port, separation of the RRU direct current voltage signals is implemented); and converts the received RRU direct current voltage signal into a TMA direct current voltage signal through the feeder line, and transmits the TMA direct current voltage signal to the TMA, so that the RRU can transmit the RRU direct current voltage signal through the feeder line of the indoor base station, and supply power to the TMA, and at the same time, the radio frequency signal transmitted on the feeder line is not influenced, thereby avoiding that a separate power line is used for transmitting the RRU direct current voltage signal, and reducing the complexity and the mounting cost of wiring and cabling.

FIG. 10 is a schematic flowchart of another signal transmission method for a base station device provided in another embodiment of the present invention; the base station device includes a BBU, an RFU, a first antenna connected to the RFU, an RRU, and a second antenna connected to the RRU. An optical fiber is threaded into an internal conductor of a feeder line, which connects the RFU to the first antenna, through an external conductor of the feeder line and the internal conductor of the feeder line, and the optical fiber in the internal conductor of the feeder line is threaded out of the external conductor of the feeder line and the internal conductor of the feeder line. As shown in FIG. 10, the signal transmission method for a base station device of this embodiment may include the following steps.
1001: Receive an optical signal from the BBU through the optical fiber in the feeder line.
1002: Transmit the optical signal to the RRU through the optical fiber in the feeder line, so as to send the optical signal to the second antenna.

The execution subject of 1001 and 1002 may be a base station device.

In this embodiment, it can be implemented that, the RRU can transmit a high-speed data signal by threading the optical fiber into a feeder line of an indoor base station, and at the same time, the radio frequency signal transmitted on the feeder line is not influenced, thereby avoiding that a separate optical fiber is used for transmitting an optical signal, and reducing the complexity and the mounting cost of wiring and cabling.

Further, in this embodiment, the base station device may further receive an RRU direct current voltage signal from a first power source module and a radio frequency signal from the RFU through the feeder line, transmit the RRU direct current voltage signal to the RRU through the feeder line to supply power to the RRU, and transmit the radio frequency signal to the first antenna through the feeder line, to radiate the radio frequency signal to a space.

In this embodiment, the base station device receives the RRU direct current voltage signal (at an antenna feeding port, feeding and consolidation of RRU direct current voltage signals are implemented) through the feeder line, and then transmits the RRU direct current voltage signal to the RRU (at an antenna port, separation of the RRU direct current voltage signals is implemented); and receives the radio frequency signal through the feeder line, and then transmits the radio frequency signal to the first antenna, so that the RRU can transmit the RRU direct current voltage signal through the feeder line of the indoor base station, and at the same time, the radio frequency signal transmitted on the feeder line is not influenced, thereby avoiding that a separate power line is used for transmitting the RRU direct current voltage signal, and reducing the complexity and the mounting cost of wiring and cabling.

Further, if a TMA is further arranged between the RFU and the first antenna, the base station device in this embodiment may further convert the RRU direct current voltage signal into a TMA direct current voltage signal through the feeder line, and transmit the TMA direct current voltage signal to the TMA through the feeder line, so as to supply power to the TMA.

Optionally, in this embodiment, the base station device may further receive a TMA direct current voltage signal from a second power source module through the feeder line, and simulate load of the TMA through the feeder line, so that the RFU can give an alarm, such as overcurrent or undercurrent, according to a value of the load of the TMA.

In this embodiment, the base station device receives the RRU direct current voltage signal (at an antenna feeding port, feeding and consolidation of RRU direct current voltage signals are implemented) through the feeder line, and then transmits the RRU direct current voltage signal to the RRU (at an antenna port, separation of the RRU direct current voltage signals is implemented); and converts the received RRU direct current voltage signal into a TMA direct current voltage signal through the feeder line, and transmits the TMA direct current voltage signal to the TMA, so that the RRU can transmit the RRU direct current voltage signal through the feeder line of the indoor base station, and supply power to the TMA, and at the same time, the radio frequency signal transmitted on the feeder line is not influenced, thereby avoiding that a separate power line is used for transmitting the RRU direct current voltage signal, and reducing the complexity and the mounting cost of wiring and cabling.

It should be noted that, the embodiments of the present invention are not limited to the RRU, and other remote modules having a high-speed data interface and requiring additional large power for power supply, arranged near a tower mounted antenna, such as an active antenna system (Active Antenna System), an antenna integrated radio (Antenna Integrated Radio, abbreviated as AIR), a base transceiver station (Base Transceiver Station, abbreviated as BTS), a transmit booster (transmit booster, abbreviated as TX booster), and a receive unit (Receive Unit, abbreviated as RXU) are all applicable to the embodiments of the present invention.

In a first aspect, a base station device is provided, which comprises a building base band unit BBU, a radio frequency unit RFU, a first antenna connected to the RFU, a remote module, and a second antenna connected to the remote module, wherein a first converter box and a second converter box are arranged on a feeder line connecting the RFU to the first antenna, wherein
the first converter box is configured to thread an optical fiber into an internal conductor of the feeder line through an external conductor of the feeder line and the internal conductor of the feeder line; and
the second converter box is configured to thread the optical fiber in the internal conductor of the feeder line out of the external conductor of the feeder line and the internal conductor of the feeder line, wherein
the BBU is connected to the remote module through the optical fiber.

As a first impossible realization of the first aspect, the first converter box is arranged near the RFU, and the second converter box is arranged near the remote module.

As a second impossible realization of the first aspect according to the first impossible realization of the first aspect or the first aspect, a third converter box and a fourth converter box are further arranged on the feeder line, wherein
the third converter box is configured to receive a remote module direct current voltage signal from a first power source module and a radio frequency signal from the RFU, transmit the remote module direct current voltage signal to the fourth converter box through the feeder line, and transmit the radio frequency signal to the fourth converter box through the feeder line; and
the fourth converter box is configured to receive the remote module direct current voltage signal and the radio frequency signal from the third converter box through the feeder line, transmit the remote module direct current voltage signal to the remote module to supply power to the remote module, and transmit the radio frequency signal to the first antenna, to radiate the radio frequency signal to a space.

As a third impossible realization of the first aspect according to the second impossible realization, the third converter box is arranged near the RFU, and the fourth converter box is arranged near the first antenna.

As a fourth impossible realization of the first aspect according to the second or third impossible realization, the third converter box and the first converter box are integrally arranged; the fourth converter box and the second converter box are integrally arranged.

As a fifth impossible realization of the first aspect according to any one of the second impossible realization to the fourth impossible realization, a tower mounted amplifier TMA is further arranged between the RFU and the first antenna;
the fourth converter box is further configured to convert the remote module direct current voltage signal into a TMA direct current voltage signal, and transmit the TMA direct current voltage signal to the TMA to supply power to the TMA.

As a sixth impossible realization of the first aspect according to the fifth impossible realization, the third converter box is further configured to receive a TMA direct current voltage signal from a second power source module, and simulate load of the TMA, so that the RFU gives an alarm according to a value of the load of the TMA corresponding to the load of the TMA.

As a seventh impossible realization of the first aspect according to the sixth impossible realization, the third converter box is further configured to send first indication information to the fourth converter box, to indicate a TMA direct current voltage value, so that the fourth converter box converts the remote module direct current voltage signal into a TMA direct current voltage signal corresponding to the TMA direct current voltage value; and receive second indication information from the fourth converter box, to indicate a value of the load of the TMA, and simulate load of the TMA corresponding to the value of the load of the TMA according to the second indication information;
the fourth converter box is further configured to receive the first indication information from the third converter box, convert the remote module direct current voltage signal into the TMA direct current voltage signal corresponding to the TMA direct current voltage value according to the first indication information, and send the second indication information to the third converter box.

As an eighth impossible realization of the first aspect according to the fifth impossible realization, the fourth converter box is further configured to send third indication information to the RFU, to indicate a value of the load of the TMA, so that the RFU gives an alarm according to the value of the load of the TMA.

As an ninth impossible realization of the first aspect according to any one of the first impossible realization to the eighth impossible realization and the first aspect, the first antenna and the second antenna are a same physical entity.

As a second aspect, a signal transmission method for a base station device is provided. The base station device comprises a building base band unit BBU, a radio frequency unit RFU, a first antenna connected to the RFU, a remote module, and a second antenna connected to the remote module, wherein an optical fiber is threaded into an internal conductor of a feeder line, which connects the RFU to the first antenna, through an external conductor of the feeder line and the internal conductor of the feeder line, and the optical fiber in the internal conductor of the feeder line is threaded out of the external conductor of the feeder line and the internal conductor of the feeder line; the method further comprises:
receiving an optical signal from the BBU through the optical fiber in the feeder line; and
transmitting the optical signal to the remote module through the optical fiber in the feeder line, to sent the optical signal to the second antenna.

As a first impossible realization of the second aspect, the method further comprises:
receiving a remote module direct current voltage signal from a first power source module and a radio frequency signal from the RFU through the feeder line; and
transmitting the remote module direct current voltage signal to the remote module through the feeder line to supply power to the remote module, and transmitting the radio frequency signal to the first antenna through the feeder line, to radiate the radio frequency signal to a space.

As a second impossible realization of the second aspect according to the first impossible realization of the second aspect or the second aspect, a tower mounted amplifier TMA is further arranged between the RFU and the first antenna; the method further comprises:
converting the remote module direct current voltage signal into a TMA direct current voltage signal through the feeder line, and transmitting the TMA direct current voltage signal to the TMA through the feeder line to supply power to the TMA.

As a third impossible realization of the second aspect according to the first impossible realization of the second aspect, the method further comprises:
receiving a TMA direct current voltage signal from a second power source module through the feeder line, and simulating load of the TMA through the feeder line, so that the RFU gives an alarm according to a value of the load of the TMA corresponding to the load of the TMA.

Finally, it should be noted that the foregoing embodiments are merely provided for describing the technical solutions of the present invention, but not intended to limit the present invention.

## Claims

1. A base station, comprising a building base band unit BBU (11), a radio frequency unit RFU (12), a first antenna (14) connected to the RFU (12), a remote module(13), and a second antenna (15) connected to the remote module (13), wherein a first converter box (17) and a second converter box (18) are arranged on a feeder line (16) connecting the RFU (12) to the first antenna (14), wherein
the first converter box (17) is configured to receive a remote module direct current voltage signal from a first power source module and a radio frequency signal from the RFU (12), transmit the remote module direct current voltage signal to the second converter box (17) through the feeder line (16), and transmit the radio frequency signal to the second converter box (17) through the feeder line (16); and
the second converter box (18) is configured to receive the remote module direct current voltage signal and the radio frequency signal from the first converter box (17) through the feeder line (16), transmit the remote module direct current voltage signal to the remote module(13) to supply power to the remote module (13), and transmit the radio frequency signal to the first antenna (14), to radiate the radio frequency signal to a space.

2. The base station according to claim 1, wherein the first converter box (17) is arranged near the RFU, and the second converter box (18) is arranged near the antenna.

3. The base station according to claim 1 or 2, further comprising a third converter box (21) and a fourth converter box (22), which are arranged on the feeder line (16), wherein
the third converter box (21) is configured to thread an optical fiber into an internal conductor of the feeder line (16) through an external conductor of the feeder line (16) and the internal conductor of the feeder line (16); and
the fourth converter box (22) is configured to thread the optical fiber in the internal conductor of the feeder line (16) out of the external conductor of the feeder line (16) and the internal conductor of the feeder line (16), wherein
the BBU (11) is connected to the remote module through the optical fiber.

4. The base station according to claim 3, wherein the third converter box (21) is arranged near the RFU (12), and the fourth converter box (22) is arranged near the remote module.

5. The base station according to claim 3 or 4, wherein the third converter box (21) and the first converter box (17) are integrally arranged; the fourth converter box (22) and the second converter box (18) are integrally arranged.

6. The base station according to any one of claims 1 to 5, wherein a tower mounted amplifier TMA (19)is further arranged between the RFU (12) and the first antenna;
the second converter box (18) is further configured to convert the remote module direct current voltage signal into a TMA direct current voltage signal, and transmit the TMA direct current voltage signal to the TMA (19) to supply power to the TMA (19).

7. The base station according to claim 6, wherein the first converter box (17) is further configured to receive a TMA direct current voltage signal from a second power source module, and simulate load of the TMA (19), wherein a value of the load of the TMA (19) corresponding to the load of the TMA (19) is an accordance for the RFU (19) giving an alarm.

8. The base station according to claim 7, wherein the first converter box (17) is further configured to send first indication information to the second converter box (18), to indicate a TMA direct current voltage value, so that the second converter box (18) converts the remote module direct current voltage signal into a TMA direct current voltage signal corresponding to the TMA direct current voltage value; and receive second indication information from the second converter box (18), to indicate a value of the load of the TMA (19), and simulate the load of the TMA (19) corresponding to the value of the load of the TMA according to the second indication information;
the second converter box (18) is further configured to receive the first indication information from the first converter box (17), convert the remote module direct current voltage signal into the TMA direct current voltage signal corresponding to the TMA direct current voltage value according to the first indication information, and send the second indication information to the first converter box (17).

9. The base station according to claim 6, wherein the second converter box (18) is further configured to send third indication information to the RFU (12), so as to indicate a value of the load of the TMA (19), wherein the value of the load of the TMA (19) is an accordance for the RFU (12) giving an alarm.

10. A method for arranging a remote module of a base station, comprising:
by a first converter box (17), receiving (901) a remote module direct current voltage signal from a first power source module and a radio frequency signal from a radio frequency unit, RFU(12) connected to a building base band unit, BBU (11), transmitting the remote module direct current voltage signal to a second converter box (18) through a feeder line connecting the RFU (12) to an antenna connected to the RFU (12), and transmitting the radio frequency signal to the second converter box (18) through the feeder line (16); and
by the second converter box (18), receiving the remote module direct current voltage signal and the radio frequency signal from the first converter box (17) through the feeder line (16), transmitting the remote module direct current voltage signal to a remote module to supply power to the remote module, and transmitting the radio frequency signal to the antenna, to radiate the radio frequency signal to a space;
and wherein the first converter box (17) and the second converter box (18) are arranged on the feeder line (16).

11. The method according to claim 10, further comprising:
by a third converter box (21), threading an optical fiber into an internal conductor of the feeder line through an external conductor of the feeder line (16) and the internal conductor of the feeder line (16); and
by a fourth converter (22), threading the optical fiber in the internal conductor of the feeder line (16) out of the external conductor of the feeder line (16) and the internal conductor of the feeder line (16), and wherein the BBU (11) is connected to the remote module through the optical fiber.

12. The method according to claim 10 or 11, wherein a tower mounted amplifier TMA (19) is further arranged between the RFU (12) and the antenna; the method further comprises:
converting, by the second converter box (18), the remote module direct current voltage signal into a TMA direct current voltage signal through the feeder line (16), and transmitting the TMA direct current voltage signal to the TMA (19) through the feeder line (16) to supply power to the TMA (19).

13. The method according to claim 12, further comprising:
receiving, by the first converter box (16), a TMA direct current voltage signal from a second power source module through the feeder line (16), and simulating load of the TMA through the feeder line (16), wherein a value of the load of the TMA (19) corresponding to the load of the TMA (19) is an accordance for the RFU (12) giving an alarm.

14. The method according to claim 13, further comprising
by the first converter box (16), sending first indication information to the second converter box (17), to indicate a TMA direct current voltage value, so that the second converter box (17) converts the remote module direct current voltage signal into a TMA direct current voltage signal corresponding to the TMA direct current voltage value; and receiving second indication information from the second converter box (17), to indicate a value of the load of the TMA (19), and simulating the load of the TMA (19) corresponding to the value of the load of the TMA (19) according to the second indication information;
by the second converter box (17), receiving the first indication information from the first converter box (16), converting the remote module direct current voltage signal into the TMA direct current voltage signal corresponding to the TMA direct current voltage value according to the first indication information, and sending the second indication information to the first converter box (17).

## Patentansprüche

1. Basisstation, die eine Gebäude-Basisbandeinheit, Gebäude-BBU (11), eine Hochfrequenzeinheit, RFU (12), eine erste Antenne (14), die mit der RFU (12) verbunden ist, ein entferntes Modul (13) und eine zweite Antenne (15), die mit dem entfernten Modul (13) verbunden ist, umfasst, wobei eine erste Umsetzer-Box (17) und eine zweite Umsetzer-Box (18) auf einer Zuführungsleitung (16), die die RFU (12) mit der ersten Antenne (14) verbindet, angeordnet sind, wobei die erste Umsetzer-Box (17) konfiguriert ist, ein Gleichspannungssignal des entfernten Moduls von einem ersten Stromquellenmodul und ein Hochfrequenzsignal von der RFU (12) zu empfangen, das Gleichspannungssignal des entfernten Moduls über die Zuführungsleitung (16) zu der zweiten Umsetzer-Box (17) zu senden und das Hochfrequenzsignal über die Zuführungsleitung (16) zu der zweiten Umsetzer-Box (17) zu senden; und
die zweite Umsetzer-Box (18) konfiguriert ist, das Gleichspannungssignal des entfernten Moduls und das Hochfrequenzsignal von der ersten Umsetzer-Box (17) über die Zuführungsleitung (16) zu empfangen, das Gleichspannungssignal des entfernten Moduls zu dem entfernten Modul (13) zu senden, um das entfernte Modul (13) mit Strom zu versorgen, und das Hochfrequenzsignal zu der ersten Antenne (14) zu senden, um das Hochfrequenzsignal in einen Raum auszustrahlen.

2. Basisstation nach Anspruch 1, wobei die erste Umsetzer-Box (17) nahe der RFU angeordnet ist und die zweite Umsetzer-Box (18) nahe der Antenne angeordnet ist.

3. Basisstation nach Anspruch 1 oder 2, die ferner eine dritte Umsetzer-Box (21) und eine vierte Umsetzer-Box (22) umfasst, die auf der Zuführungsleitung (16) angeordnet sind, wobei
die dritte Umsetzer-Box (21) konfiguriert ist, einen Lichtleiter in einen inneren Leiter der Zuführungsleitung (16) durch einen äußeren Leiter der Zuführungsleitung (16) und den inneren Leiter der Zuführungsleitung (16) zu ziehen; und
die vierte Umsetzer-Box (22) konfiguriert ist, den Lichtleiter in dem inneren Leiter der Zuführungsleitung (16) aus dem äußeren Leiter der Zuführungsleitung (16) und dem inneren Leiter der Zuführungsleitung (16) zu ziehen, wobei die BBU (11) mit dem entfernten Modul über den Lichtleiter verbunden ist.

4. Basisstation nach Anspruch 3, wobei die dritte Umsetzer-Box (21) nahe der RFU (12) angeordnet ist und die vierte Umsetzer-Box (22) nahe dem entfernten Modul angeordnet ist.

5. Basisstation nach Anspruch 3 oder 4, wobei die dritte Umsetzer-Box (21) und die erste Umsetzer-Box (17) integral angeordnet sind; die vierte Umsetzer-Box (22) und die zweite Umsetzer-Box (18) integral angeordnet sind.

6. Basisstation nach einem der Ansprüche 1 bis 5, wobei ferner ein Mastverstärker, TMA (19), zwischen der RFU (12) und der ersten Antenne angeordnet ist;
die zweite Umsetzer-Box (18) ferner konfiguriert ist, das Gleichspannungssignal des entfernten Moduls in ein TMA-Gleichspannungssignal umzusetzen und das TMA-Gleichspannungssignal zu dem TMA (19) zu senden, um den TMA (19) mit Strom zu versorgen.

7. Basisstation nach Anspruch 6, wobei die erste Umsetzer-Box (17) ferner konfiguriert ist, ein TMA-Gleichspannungssignal von einem zweiten Stromquellenmodul zu empfangen und eine Last des TMA (19) zu simulieren, wobei ein Wert der Last des TMA (19), der der Last des TMA (19) entspricht, in Übereinstimmung damit ist, dass die RFU (19) einen Alarm ausgibt.

8. Basisstation nach Anspruch 7, wobei
die erste Umsetzer-Box (17) ferner konfiguriert ist, erste Angabeinformationen zu der zweiten Umsetzer-Box (18) zu senden, um den TMA-Gleichspannungswert anzugeben, so dass die zweite Umsetzer-Box (18) das Gleichspannungssignal des entfernten Moduls in ein TMA-Gleichspannungssignal umsetzt, das dem TMA-Gleichspannungswert entspricht; und zweite Angabeinformationen von der zweiten Umsetzer-Box (18) zu empfangen, um einen Wert der Last des TMA (19) anzugeben, und die Last des TMA (19), die dem Wert der Last des TMA entspricht, gemäß den zweiten Angabeinformationen zu simulieren;
wobei die zweite Umsetzer-Box (18) ferner konfiguriert ist, die ersten Angabeinformationen von der ersten Umsetzer-Box (17) zu empfangen, das Gleichspannungssignal des entfernten Moduls in das TMA-Gleichspannungssignal, das dem TMA-Gleichspannungswert entspricht, gemäß den ersten Angabeinformationen umzusetzen, und die zweiten Angabeinformationen zu der ersten Umsetzer-Box (17) zu senden.

9. Basisstation nach Anspruch 6, wobei die zweite Umsetzer-Box (18) ferner konfiguriert ist, dritte Angabeinformationen zu der RFU (12) zu senden, um einen Wert der Last des TMA (19) anzugeben, wobei der Wert der Last des TMA (19) in Übereinstimmung damit ist, dass die RFU (12) einen Alarm ausgibt.

10. Verfahren zum Anordnen eines entfernten Moduls einer Basisstation, das Folgendes umfasst:
durch eine erste Umsetzer-Box (17) Empfangen (901) eines Gleichspannungssignal eines entfernten Moduls von einem ersten Stromquellenmodul und eines Hochfrequenzsignals von einer Hochfrequenzeinheit, RFU (12), die mit einer Gebäude-Basisbandeinheit, BBU (11), verbunden ist, Senden des Gleichspannungssignals des entfernten Moduls zu einer zweiten Umsetzer-Box (18) über eine Zuführungsleitung, die die RFU (12) mit einer Antenne, die mit der RFU (12) verbunden ist, verbindet, und Senden des Hochfrequenzsignals über die Zuführungsleitung (16) zu der zweiten Umsetzer-Box (18); und
durch die zweite Umsetzer-Box (18) Empfangen des Gleichspannungssignals des entfernten Moduls und des Hochfrequenzsignals von der ersten Umsetzer-Box (17) über die Zuführungsleitung (16), Senden des Gleichspannungssignals des entfernten Moduls zu einem entfernten Modul, um das entfernte Modul mit Strom zu versorgen, und Senden des Hochfrequenzsignals zu der Antenne, um das Hochfrequenzsignal in einen Raum auszustrahlen;
und wobei die erste Umsetzer-Box (17) und die zweite Umsetzer-Box (18) auf der Zuführungsleitung (16) angeordnet sind.

11. Verfahren nach Anspruch 10, das ferner Folgendes umfasst:
durch eine dritte Umsetzer-Box (21) Ziehen eines Lichtleiters in einen inneren Leiter der Zuführungsleitung durch einen äußeren Leiter der Zuführungsleitung (16) und den inneren Leiter der Zuführungsleitung (16); und
durch einen vierten Umsetzer (22) Ziehen des Lichtleiters in dem inneren Leiter der Zuführungsleitung (16) aus dem äußeren Leiter der Zuführungsleitung (16) und dem inneren Leiter der Zuführungsleitung (16), und wobei die BBU (11) mit dem entfernten Modul über den Lichtleiter verbunden ist.

12. Verfahren nach Anspruch 10 oder 11, wobei ferner ein Mastverstärker, TMA (19), zwischen der RFU (12) und der Antenne angeordnet ist; wobei das Verfahren ferner Folgendes umfasst:
Umsetzen durch die zweite Umsetzer-Box (18) des Gleichspannungssignals des entfernten Moduls in ein TMA-Gleichspannungssignal über die Zuführungsleitung (16) und Senden des TMA-Gleichspannungssignals über die Zuführungsleitung (16) zu dem TMA (19), um den TMA (19) mit Strom zu versorgen.

13. Verfahren nach Anspruch 12, das ferner Folgendes umfasst:
Empfangen durch die erste Umsetzer-Box (16) eines TMA-Gleichspannungssignals von einem zweiten Stromquellenmodul über die Zuführungsleitung (16) und Simulieren einer Last des TMA über die Zuführungsleitung (16), wobei ein Wert der Last des TMA (19), der der Last des TMA (19) entspricht, in Übereinstimmung damit ist, dass die RFU (12) einen Alarm ausgibt.

14. Verfahren nach Anspruch 13, das ferner Folgendes umfasst:
durch die erste Umsetzer-Box (16) Senden erster Angabeinformationen zu der zweiten Umsetzer-Box (17), um den TMA-Gleichspannungswert anzugeben, so dass die zweite Umsetzer-Box (17) das Gleichspannungssignal des entfernten Moduls in ein TMA-Gleichspannungssignal umsetzt, das dem TMA-Gleichspannungswert entspricht; und Empfangen zweiter Angabeinformationen von der zweiten Umsetzer-Box (17), um einen Wert der Last des TMA (19) anzugeben, und Simulieren der Last des TMA (19), die dem Wert der Last des TMA (19) entspricht, gemäß den zweiten Angabeinformationen;
durch die zweite Umsetzer-Box (17) Empfangen der ersten Angabeinformationen von der ersten Umsetzer-Box (16), Umsetzen des Gleichspannungssignals des entfernten Moduls in das TMA-Gleichspannungssignal, das dem TMA-Gleichspannungswert entspricht, gemäß den ersten Angabeinformationen, und Senden der zweiten Angabeinformationen zu der ersten Umsetzer-Box (17).

## Revendications

1. Station de base, comprenant une unité en bande de base BBU de construction (11), une unité radiofréquence RFU (12), une première antenne (14) connectée à la RFU (12), un module distant (13), et une seconde antenne (15) connectée au module distant (13), dans laquelle une première boîte de convertisseur (17) et une deuxième boîte de convertisseur (18) sont agencées sur une ligne d'alimentation (16) reliant la RFU (12) à la première antenne (14), dans laquelle la première boîte de convertisseur (17) est configurée pour recevoir un signal de tension de courant continu de module distant depuis un premier module de source de puissance et un signal radiofréquence depuis la RFU (12), transmettre le signal de tension de courant continu de module distant à la deuxième boîte de convertisseur (17) par le biais de la ligne d'alimentation (16), et transmettre le signal radiofréquence à la deuxième boîte de convertisseur (17) par le biais de la ligne d'alimentation (16) ; et
la deuxième boîte de convertisseur (18) est configurée pour recevoir le signal de tension de courant continu du module distant et le signal radiofréquence depuis la première boîte de convertisseur (17) par le biais de la ligne d'alimentation (16), transmettre le signal de tension de courant continu du module distant au module distant (13) pour alimenter en puissance le module distant (13), et transmettre le signal radiofréquence à la première antenne (14), pour rayonner le signal radiofréquence dans un espace.

2. Station de base selon la revendication 1, dans laquelle la première boîte de convertisseur (17) est agencée près de la RFU, et la deuxième boîte de convertisseur (18) est agencée près de l'antenne.

3. Station de base selon la revendication 1 ou 2, comprenant en outre une troisième boîte de convertisseur (21) et une quatrième boîte de convertisseur (22), lesquelles sont agencées sur la ligne d'alimentation (16), dans laquelle la troisième boîte de convertisseur (21) est configurée pour passer une fibre optique dans un conducteur interne de la ligne d'alimentation (16) à travers un conducteur externe de la ligne d'alimentation (16) et le conducteur interne de la ligne d'alimentation (16) ; et
la quatrième boîte de convertisseur (22) est configurée pour passer la fibre optique dans le conducteur interne de la ligne d'alimentation (16) hors du conducteur externe de la ligne d'alimentation (16) et du conducteur interne de la ligne d'alimentation (16), dans laquelle la BBU (11) est connectée au module distant par le biais de la fibre optique.

4. Station de base selon la revendication 3, dans laquelle la troisième boîte de convertisseur (21) est agencée près de la RFU (12), et la quatrième boîte de convertisseur (22) est agencée près du module distant.

5. Station de base selon la revendication 3 ou 4, dans laquelle la troisième boîte de convertisseur (21) et la première boîte de convertisseur (17) sont agencées de manière intégrée ; la quatrième boîte de convertisseur (22) et la deuxième boîte de convertisseur (18) sont agencées de manière intégrée.

6. Station de base selon l'une quelconque des revendications 1 à 5, dans laquelle un amplificateur en tour TMA (19) est agencé en outre entre la RFU (12) et la première antenne ;
la deuxième boîte de convertisseur (18) est configurée en outre pour convertir le signal de tension de courant continu de module distant en un signal de tension de courant continu de TMA, et transmettre le signal de tension de courant continu de TMA au TMA (19) pour alimenter en puissance le TMA (19).

7. Station de base selon la revendication 6, dans laquelle la première boîte de convertisseur (17) est configurée en outre pour recevoir un signal de tension de courant continu de TMA depuis un second module de source de puissance, et simuler une charge du TMA (19), dans laquelle une valeur de la charge du TMA (19) correspondant à la charge du TMA (19) est conforme à l'émission d'une alarme par la RFU (19).

8. Station de base selon la revendication 7, dans laquelle la première boîte de convertisseur (17) est configurée en outre pour envoyer des premières informations d'indication à la deuxième boîte de convertisseur (18), indiquer une valeur de tension de courant continu de TMA, de telle sorte que la deuxième boîte de convertisseur (18) convertisse le signal de tension de courant continu de module distant en un signal de tension de courant continu de TMA correspondant à la valeur de tension de courant continu de TMA, et recevoir des deuxièmes informations d'indication depuis la deuxième boîte de convertisseur (18), pour indiquer une valeur de la charge du TMA (19), et simuler la charge du TMA (19) correspondant à la valeur de la charge du TMA conformément aux deuxièmes informations d'indication ;
la deuxième boîte de convertisseur (18) est configurée en outre pour recevoir les premières informations d'indication depuis la première boîte de convertisseur (17), convertir le signal de tension de courant continu de module distant en le signal de tension de courant continu de TMA correspondant à la valeur de tension de courant continu de TMA conformément aux premières informations d'indication, et envoyer les deuxièmes informations d'indication à la première boîte de convertisseur (17).

9. Station de base selon la revendication 6, dans laquelle la deuxième boîte de convertisseur (18) est configurée en outre pour envoyer des troisièmes informations d'indication à la RFU (12), de manière à indiquer une valeur de la charge du TMA (19), dans laquelle la valeur de la charge du TMA (19) est conforme à l'émission d'une alarme par la RFU (12).

10. Procédé d'agencement d'un module distant d'une station de base, comprenant :
par une première boîte de convertisseur (17), la réception (901) d'un signal de tension de courant continu de module distant depuis un premier module de source de puissance et d'un signal radiofréquence depuis une unité radiofréquence, RFU (12) connectée à une unité de bande de base BBU de construction (11), la transmission du signal de tension de courant continu de module distant à une deuxième boîte de convertisseur (18) par le biais d'une ligne d'alimentation reliant la RFU (12) à une antenne connectée à la RFU (12), et la transmission du signal radiofréquence à la deuxième boîte de convertisseur (18) par le biais de la ligne d'alimentation (16) ; et
par la deuxième boîte de convertisseur (18), la réception du signal de tension de courant continu de module distant et du signal radiofréquence depuis la première boîte de convertisseur (17) par le biais de la ligne d'alimentation (16), la transmission du signal de tension de courant continu de module distant à un module distant pour alimenter en puissance le module distant et la transmission du signal radiofréquence à l'antenne, pour rayonner le signal radiofréquence dans un espace ;
et dans lequel la première boîte de convertisseur (17) et la deuxième boîte de convertisseur (18) sont agencées sur la ligne d'alimentation (16).

11. Procédé selon la revendication 10, comprenant en outre :
par une troisième boîte de convertisseur (21), le passage d'une fibre optique dans un conducteur interne de la ligne d'alimentation à travers un conducteur externe de la ligne d'alimentation (16) et le conducteur interne de la ligne d'alimentation (16) ; et
par une quatrième boîte de convertisseur (22), le passage de la fibre optique dans le conducteur interne de la ligne d'alimentation (16) hors du conducteur externe de la ligne d'alimentation (16) et du conducteur interne de la ligne d'alimentation (16), et dans laquelle la BBU (11) est connectée au module distant par le biais de la fibre optique.

12. Procédé selon la revendication 10 ou 11, dans laquelle un amplificateur en tour TMA (19) est agencé en outre entre la RFU (12) et l'antenne ; le procédé comprenant en outre :
la conversion, par la deuxième boîte de convertisseur (18), du signal de tension de courant continu de module distant en un signal de tension de courant continu de TMA par le biais de la ligne d'alimentation (16), et la transmission du signal de tension de courant continu de TMA au TMA (19) par le biais de la ligne d'alimentation (16) pour alimenter en puissance le TMA (19).

13. Procédé selon la revendication 12, comprenant en outre :
la réception, par la première boîte de convertisseur (16), d'un signal de tension de courant continu de TMA depuis un second module de source de puissance par le biais de la ligne d'alimentation (16), et la simulation d'une charge du TMA par le biais de la ligne d'alimentation (16), dans laquelle une valeur de la charge du TMA (19) correspondant à la charge du TMA (19) est conforme à l'émission d'une alarme par la RFU (12).

14. Procédé selon la revendication 13, comprenant en outre :
par la première boîte de convertisseur (16), l'envoi de premières informations d'indication à la deuxième boîte de convertisseur (17), pour indiquer une valeur de tension de courant continu de TMA, de telle sorte que la deuxième boîte de convertisseur (17) convertisse le signal de tension de courant continu du module distant en un signal de tension de courant continu de TMA correspondant à la valeur de tension de courant continu de TMA ; et la réception de deuxièmes informations d'indication depuis la deuxième boîte de convertisseur (17), pour indiquer une valeur de la charge du TMA (19), et simuler la charge du TMA (19) correspondant à la valeur de la charge du TMA (19) conformément aux deuxièmes informations d'indication ;
par la deuxième boîte de convertisseur (17), la réception des premières informations d'indication depuis la première boîte de convertisseur (16), la conversion du signal de tension de courant continu de module distant en le signal de tension de courant continu de TMA correspondant à la valeur de tension de courant continu de TMA conformément aux premières informations d'indication, et l'envoi des deuxièmes informations d'indication à la première boîte de convertisseur (17).
